Europäisches Patentamt

European Patent Office

Office européen des brevets

(19)

(11) **EP 1 585 326 A1**

(12) **EUROPEAN PATENT APPLICATION**

(43) Date of publication:
**12.10.2005 Bulletin 2005/41**

(51) Int Cl.⁷: **H04N 7/00**, H04N 7/01,
H04N 7/26

(21) Application number: **04007698.6**

(22) Date of filing: **30.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicant: **MATSUSHITA ELECTRIC INDUSTRIAL
CO., LTD.**
**Kadoma-shi, Osaka 571-8501 (JP)**

(72) Inventors:
• **Hubrich, Ralf**
  **64331 Weiterstadt-Gräfenhausen (DE)**

• **Eckhardt, Michael**
  **65207 Wiesbaden (DE)**

(74) Representative: **Grünecker, Kinkeldey,
Stockmair & Schwanhäusser Anwaltssozietät
Maximilianstrasse 58
80538 München (DE)**

Remarks:
Amended claims in accordance with Rule 86 (2)
EPC.

(54) **Motion vector estimation at image borders for frame rate conversion**

(57)    The present invention relates to an improved estimation of motion vectors, especially for use in motion compensated interpolation for rate up-converters. As conventional motion estimation algorithms fail to provide accurate estimations for those blocks positioned at the borders of the active image, the present invention determines those blocks which may suffer from defected motion vectors and replaces these vectors by a column or a line motion vector determined based on the previous image. In this manner, a reliable motion estimation is enabled for all blocks of an image, and a degradation of interpolation algorithms at the borders of the active image can efficiently be prevented.

Fig. 11

EP 1 585 326 A1

**Description**

The present invention relates to an improved method for motion vector estimation and a corresponding motion estimator. Particularly, the present invention relates to an improved motion vector determination at image borders.

Motion estimation is especially used in digital signal processing of modern television receivers. Such television receivers employ motion vectors in order to determine intermediate images during frame-rate conversion, in particular, motion compensated up-conversion. The intermediate images are interpolated based on adjacent images from a received field or frame sequence. By taking the motion of objects into account, a degradation of the image quality of the object can be avoided.

Motion compensated up-conversion is performed by LSIs from 50 Hz to higher frequencies, for instance 60 Hz, 66.67 Hz, 75 Hz, 100 Hz. For 60 Hz based video frequencies, the video sequence may be up-converted to 72 Hz, 80 Hz, 90 Hz, 120 Hz, etc.

During up-conversion, intermediate images are to be generated which reflect the video content at positions in time which are not represented by the 50 Hz or 60 Hz input video sequence. For this purpose, the motion of moving objects has to be taken into account in order to appropriately reflect the changes between subsequent images caused by the motion of objects. The motion of objects is calculated on a block basis, and motion compensation is performed based on the relative position in time of the newly generated image between the previous and subsequent images.

For motion vector determination, each image is divided into a plurality of blocks. Each block is subjected to motion estimation in order to detect a shift of an object from the previous image. A time consuming full search algorithm for detecting a best match block in the previous image within a predefined search range is preferably avoided by employing a plurality of predefined candidate vectors. The set of candidate vectors includes a number of predefined most likely motion vectors.

A motion vector is selected from the candidate vectors based on an error value calculated for each of the candidate vectors. This error function assesses the degree of conformity between the current block and the candidate block in the previous image selected in accordance with the respective candidate vector. The best matching vector having the smallest error function is selected as the motion vector of the current block. As a measure for the degree of similarity between the current and the previous block, the Summed Absolute Differences (SAD) may be employed.

The set of predefined candidate vectors may include those motion vectors as candidate vectors which have already been determined for adjacent blocks of the current image, motion vectors which have been determined for blocks in the previous image at a similar position, etc.

The Article "An Efficient True-Motion Estimator Using Candidate Vectors from a Parametric Motion Model" from Gerard de Haan et al. in IEEE Transactions on Circuits and Systems for Video Technology, vol. 8, no.1, February 1998, describes the calculation of a global motion vector as a candidate vector. The global motion vector reflects a common motion of all blocks of the image.

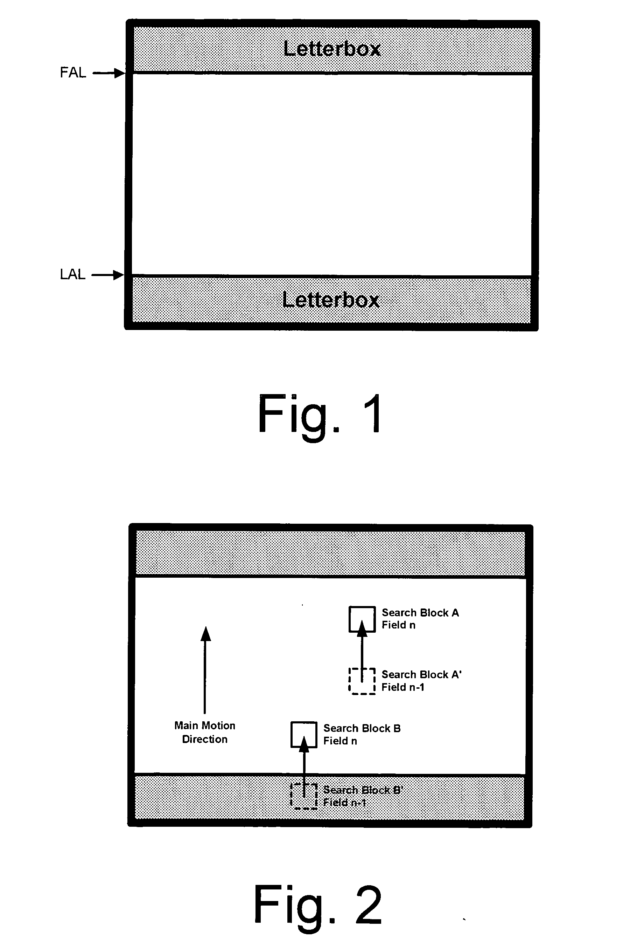

Up-conversion algorithms, which are used in high-end television receivers, suffer from poor image quality at the upper or lower borders in a letterbox type display image in case of vertical motion. A letterbox type display image is illustrated in Fig.1. In order to adapt a 4:3 display screen to an image format of 16:9, black bars are inserted at the top and bottom of the active image area. In a corresponding manner, black bars inserted at the left and right side of said image area are used to adapt a 4:3 active image area for display on a 16:9 format display screen. Black bars can be employed accordingly in order to adapt an active image area for display on a display screen wherein the aspect ratios of the active image area and the display screen do not match.

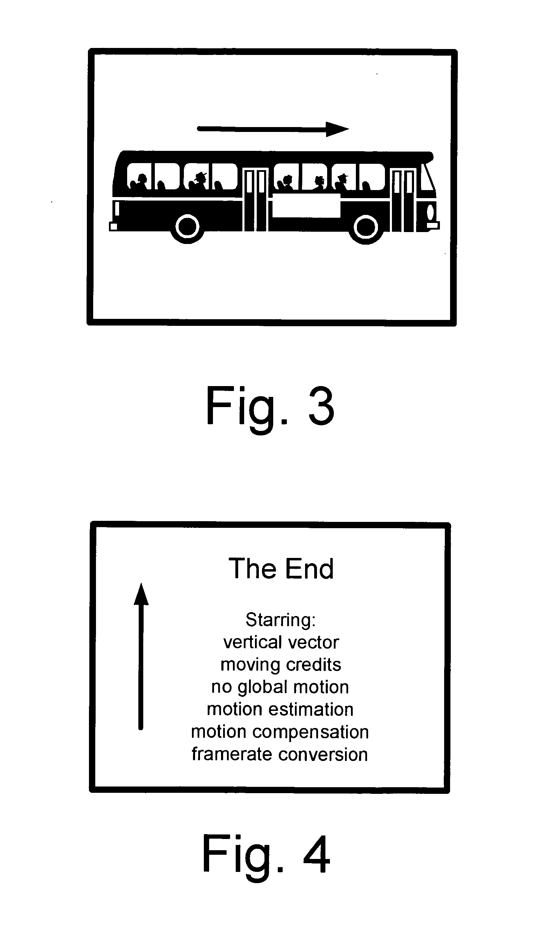

Examples for performing motion estimation in a letterbox type image are illustrated in Fig. 2. The main motion direction of the image n content is directed upward. Consequently, the image content of block A is detected at a downward postion thereof A' in the previous field *n-1*. Accordingly, block B' is positioned downwards with respect to block B.

As can be seen from Fig. 2, the previous position of block B' exceeds the lower border of the active image area. Consequently, a motion estimator comparing blocks of the previous image with the current block will not be able to detect the correct motion of block B. Instead, conventional motion estimators will either detect an inaccurate motion vector or a zero motion vector. A motion compensated interpolation based on such a conventionally determined motion vector will result in artefacts visible in proximity to the black bars within the active image area.

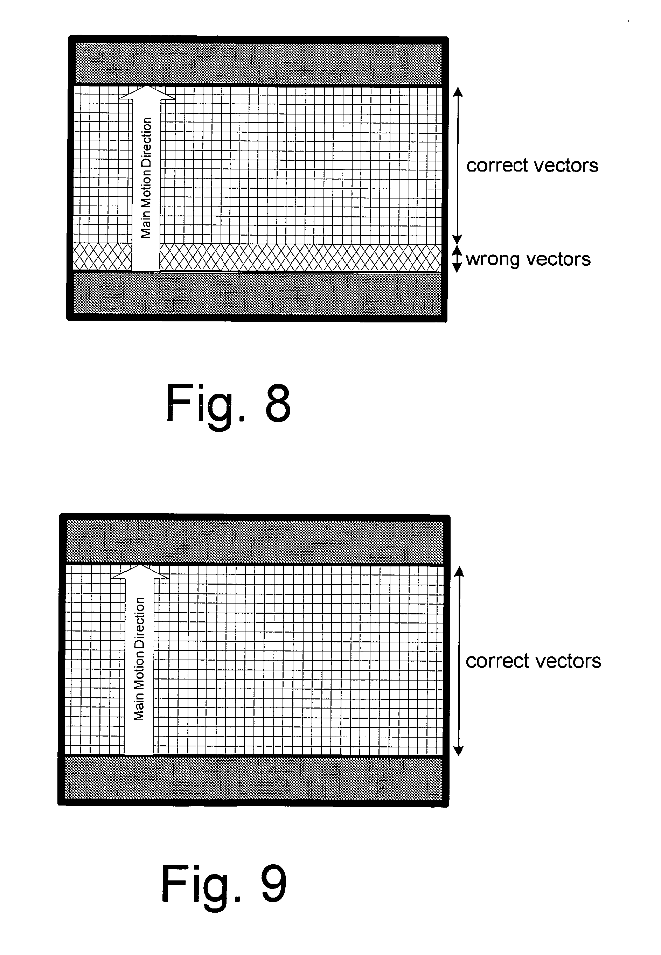

A simplified example of a conventional estimated field of motion vectors is illustrated in Fig. 8. The image content moves with in the main motion direction, i.e. upward. While most of the motion vectors can be correctly determined, it is impossible for conventional motion estimation algorithms to correctly derive motion at the letterbox borders. The range of incorrect motion vectors within the active image area is illustrated in Fig. 8. As the main motion direction of the image content is directed upward, the lower lines of blocks have no respective antecedent in a previous field or frame. Consequently, a motion estimator will not be able to determine the correct motion vector. In contrast, any other motion vector which has a respective block in the previous field or frame may be correctly determined based on a best match algorithm.

For non-letterbox type images, the outer borders of an active image are normally within the overscan area and thus not visible on a normal display screen. These blocks of the overscan area which are positioned directly next to the borders of the active image will not be displayed and can thus not cause an image quality degradation. As soon as the motion vectors become larger, blocks within the display screen are affected and cause a respective loss in image quality.

In case of such larger motion vectors, the image quality degradation is considerably affected for letterbox type display images. Letterbox images shift the outer border of an active image area from the overscan area into the displayed image. When applying interpolation, these image areas suffer mostly from defective motion vectors when applying interpolation algorithms.

It is the object of the present invention to provide an improved method for motion estimation and an improved motion estimator enabling a more accurate motion vector determination at the image borders.

This is achieved by the features of the independent claims.

According to a first aspect of the present invention, a method for determining a motion vector for a block of a current image in a sequence of video images is provided. Each video image is divided into a plurality of blocks. A motion vector is determined for all blocks of a line or column of blocks in a previous image of the sequence of video images. The line or column of blocks includes a block which is located at a position corresponding to the position of the current block in the current image. The determined line or column motion vector is assigned to the current block if a position of the current block in the previous image estimated on the basis of the determined line or column motion vector is outside of the active image area of the previous image.

According to another aspect of the present invention, a motion estimator for determining a motion vector for a block of a current image in a sequence of video images is provided. Each video image is divided into a plurality of blocks. A calculation unit determines a motion vector for all blocks of a line or column of blocks in a previous image of the sequence of video images. The line or column of blocks includes a block located at a position corresponding to the position of the current block in the current image. A position estimator estimates a position of the current block in the previous image based on the determined line or column motion vector. A comparator determines whether or not the estimated position is outside of the active image area of the previous image. An enabling unit assigns the determined line or column motion vector to the current block if the position of the current block estimated on the basis of the determined line or column motion vector is outside of the active image area of the previous image.

It is the particular approach of the present invention to replace the conventional motion estimation for those blocks at the border of the image for which a correct motion vector cannot be established in all probability in a conventional manner. For this purpose, the motion estimated for blocks of the previous image is evaluated by determining a single motion vector for a line or a column of blocks which include the position of the current block. Such a motion vector reflects the predominant motion of objects within this line or column of blocks. If the application of this line or column motion vector to the blocks at the image borders indicate that an accurate motion vector cannot be established for these blocks, a conventional motion vector as estimated is suspended by assigning the determined line or column motion vector to this block. In this manner, an image quality degradation, which is caused by interpolation based on conventional motion vector estimation algorithms, can be avoided.

While the approach of the present invention can be advantageously applied to all types of image formats, the present invention is preferably applied to letterbox type image formats, i.e. those image formats having black bars at the top and bottom or left and right sides of the display area. In this manner, a considerably increased image quality at the image borders next to the black bars can be achieved.

Preferably, for images having black bars at the top and bottom side, only column vectors are determined and employed for determining a motion vector for the blocks at the image border. Correspondingly, for images which have black bars at the left and right side thereof only make use of a line motion vector.

According to another embodiment, a line motion vector and a column motion vector are employed to improve the motion vector estimation at the image borders. In this manner, all image borders benefit from the motion vector estimation improvement of the present invention.

It is to be noted that the present invention is applicable to all kinds of video image formats including standard television images or high definition television images.

Preferably, a line or column vector is only determined and assigned to a current block if the determined motion vector exceeds a predefined threshold. Preferably, the size of the threshold corresponds to the size of the blocks, i.e. the block's height or width.

According to a preferred embodiment, the motion vector is split into a vertical and horizontal vector component and only that vector component directed perpendicular to the respective image border is compared to the threshold. For the top and bottom borders of an image, only the vertical component of a column vector is taken into account. Correspondingly, for the left and right borders of the image, only the horizontal component of a line motion is compared to the threshold. In this manner, those blocks can be reliably determined for which an accurate motion estimation is impossible otherwise.

Preferably, the assignment of a motion vector in accordance with the present invention includes the determination of a range of blocks for which a reliable motion vector cannot be determined in a conventional manner. To each block of the current image which falls into the range, the determined line or column motion vector is assigned. In this manner, the required calculation for applying the line or column motion vector of the previous image to a current block is simplified.

Preferably, the range is defined by an inner border and an outer image border within the line or column wherein the range is calculated by only identifying the inner border thereof. Preferably, the motion vector type and direction is taken into account to this respect.

Preferably, the improved motion estimation of the present invention is employed in motion compensated image interpolation or in motion compensated image compression.

Preferred embodiments of the present invention are the subject matter of dependent claims.

The above and other objects and features of the present invention will become more apparent from the following description and preferred embodiments given in conjunction with accompanying drawings, in which:

Fig. 1      illustrates an example of a letterbox type video image;

Fig. 2      illustrates examples of motion vector estimation for different blocks in a letterbox type image as shown in Fig. 1;

Fig. 3      illustrates an example of a large uniformly moving object in a video image;

Fig. 4      illustrates another example for a large, uniformly moving image portion;

Fig. 5      illustrates a line vector indicating the motion of the large object of Fig. 3;

Fig. 6      illustrates a column vector indicating the motion of vertically moving credits shown in Fig. 4;

Fig. 7      illustrates the division of a video image into a raster of blocks of a uniform size;

Fig. 8      illustrates an example for image areas susceptible to defective motion vector determination in case of vertical motion;

Fig. 9      illustrates a vector field for a letterbox type image determined in accordance with the present invention;

Fig. 10     illustrates an example configuration for a field-rate converter; and

Fig. 11     illustrates a configuration of a field-rate converter in accordance with the present invention.

Interpolation circuits, especially for use in frame- or field-rate up-converters, require a non-defective motion vector field in order to generate intermediate images of high image quality. Based on an accurately determined motion vector field, moving objects can be shifted to their respective position in an intermediate image in accordance with the position of the intermediate image in time. Conventional block matching algorithms fail to provide accurate motion vectors at the borderlines of the active image area, in particular at the upper and lower active image borders for a letterbox display image. For letterbox type images as shown in Fig. 1, defective motion vectors are caused by vertical motion. Vertical motion can conventionally only accurately be estimated by detecting respective blocks in the previous field as illustrated in Fig. 2. However, if the respective block in the previous field would have a position outside of the active image area, i.e. within the black bars, conventional motion estimation algorithms fail.

The present invention aims to overcome the imperfect conventional motion estimation at the image borders by employing line or column motion vectors. The determination of such line and column vectors will be described next.

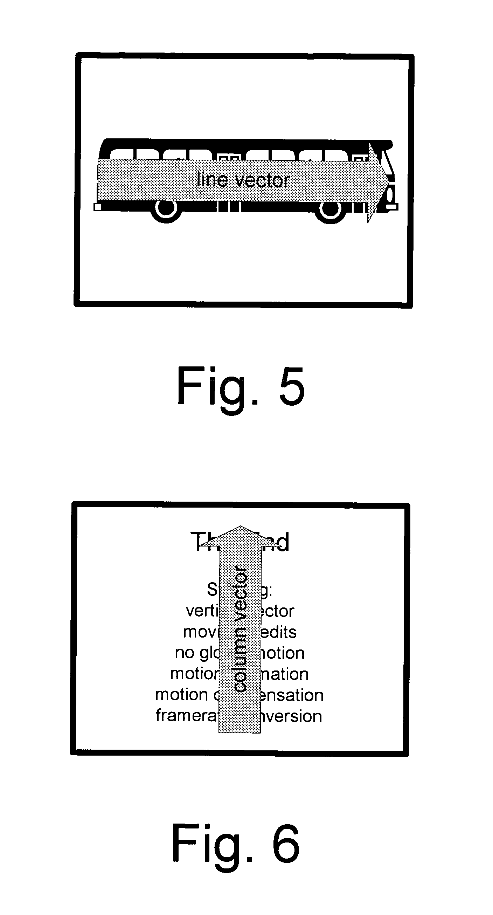

Figures 3 and 4 illustrate large moving image portions having a uniform motion vector for a large number of blocks. While Fig. 3 illustrates an example of a horizontally moving object, Fig. 4 illustrates a vertically moving text, i. e. movie credits. The corresponding line and column vectors reflecting such motion are illustrated in Figures 5 and 6.

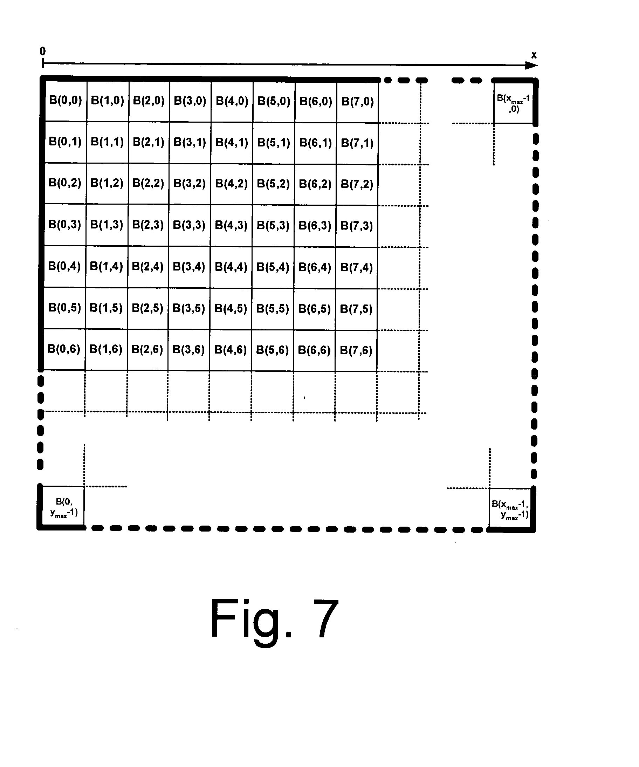

The motion vector calculation is based on the block raster illustrated in Fig. 7. Each video image is divided in blocks of a uniform size for motion vector estimation. Generally, each block has a square shape of 8x8 pixels. It is to be noted that a skilled person is aware to apply blocks of a different size, for instance, $4 \times 4$ or $16 \times 16$ or even irregular rectangular shape having a different height and width.

Based on the motion vectors determined for a previous field or frame, the column motion vectors or line motion vectors are calculated.

As soon as the motion vector determination for a current image n (field or frame) has been completed, the calculation of respective line and column vectors is started. The calculated line and column vectors are provided for use during motion estimation of the next field or frame.

First, motion vectors of a minor length are excluded from being taken into account. For this purpose, the motion vector $\vec{v}$ of each block is compared to a predefined threshold value $v_{thr}$. The result therefore is reflected in a binary "vecthr" flag assigned to each of the blocks. This flag is calculated as indicated by equation (1):

$$vecthr\big[(x,y),n\big] \;=\; \begin{array}{l} 1, if(\vec{v}\big[(x,y),n\big] > \vec{v}_{thr}) \\ 0, else \end{array} \tag{1}$$

Preferably, the set of motion vectors determined for all blocks of image $n$ is revised accordingly such that those motion vectors are set to zero (0;0) which do not exceed the predefined threshold value $v_{thr}$. This revision is reflected by equation (2):

$$\vec{v}_{thresholded}\big[(x,y),n\big] \;=\; \begin{array}{l} \vec{v}\big[(x,y),n\big], if(vecthr\big[(x,y),n\big] > 0) \\ (0;0), else \end{array} \tag{2}$$

In accordance with equation (2), a thresholded vector $\vec{v}_{thresholded}$ is calculated. The thresholded vector is set to zero if the previously calculated flag (cf. equation (1)) is zero. Otherwise, the determined vector $\vec{v}$ is assigned to the thresholded vector $\vec{v}_{thresholded}$.

For the calculation of a line or column vector, preferably a mean value of the remaining (thresholded) non-zero vectors is calculated. However, a skilled person may apply any other algorithm in order to determine a motion vector representing a common motion vector for a plurality of individual motion vectors of a line or column.

For the line and column vector calculation, the individual block lengths and the number of blocks exceeding the threshold value $v_{thr}$ are accumulated as indicated by the following equations (3) to (6):

$$\vec{v}_{sum\_line}(y) = \sum_{x=0}^{x_{max}-1} \vec{v}_{thresholded}\big[(x,y),n\big] \tag{3}$$

$$\vec{v}_{sum\_column}(x) = \sum_{y=0}^{y_{max}-1} \vec{v}_{thresholded}\big[(x,y),n\big] \tag{4}$$

$$n_{sum\_line}(y) = \sum_{x=0}^{x_{max}-1} vecthr\big[(x,y),n\big] \tag{5}$$

$$n_{sum\_column}(x) = \sum_{y=0}^{y_{max}-1} vecthr\big[(x,y),n\big] \tag{6}$$

The line and column vectors $\vec{v}_{line}$, $\vec{v}_{column}$ are calculated in accordance with the following equations (7) and (8). A motion vector is only calculated if the number of blocks exceeding the predetermined threshold $v_{thr}$ for a line or column exceeds another predefined threshold $nthr_{line}$, $nthr_{column}$.

$$\vec{v}_{line}\big[(y),n\big] = \frac{\vec{v}_{sum\_line}(y)}{n_{sum\_line}(y)}, if(n_{sum\_line}(y) > nthr_{line}) \quad (7)$$
$$(0;0), else$$

$$\vec{v}_{column}\big[(x),n\big] = \frac{\vec{v}_{sum\_column}(x)}{n_{sum\_column}(x)}, if(n_{sum\_column}(x) > nthr_{column}) \quad (8)$$
$$(0;0), else$$

Referring to the above-mentioned thresholds $v_{thr}$, $nthr_{line}$, $nthr_{column}$, preferably the following values are employed:

$$\vec{v}_{thr} = 4$$

$$nthr_{line} = x_{max}/2 (45 \text{ for PAL standard and } X = 8)$$

$$nthr_{column} = y_{max}/2 (36 \text{ for PAL standard and } Y = 8)$$

wherein $x_{max}$ and $y_{max}$ represent the total width/height of a field or frame. The values are preferably employed for a block size of 8×8 pixels.

While the above description is based on the assumption that line and column vectors are calculated for each individual line and column, a common motion vector may additional or alternatively be calculated for combinations of two lines or two columns. A two line or two column motion vector may further increase the motion accuracy for objects representing the predominant motion within two lines or two columns.

An example of a conventionally determined motion vector field for a letterbox type image in case of vertical motion shown in Fig. 8 is defected in proximity to the bottom line of the active image area. By applying a motion vector estimation in accordance with the present invention, the prior art deficiencies are avoided as in Fig. 9.

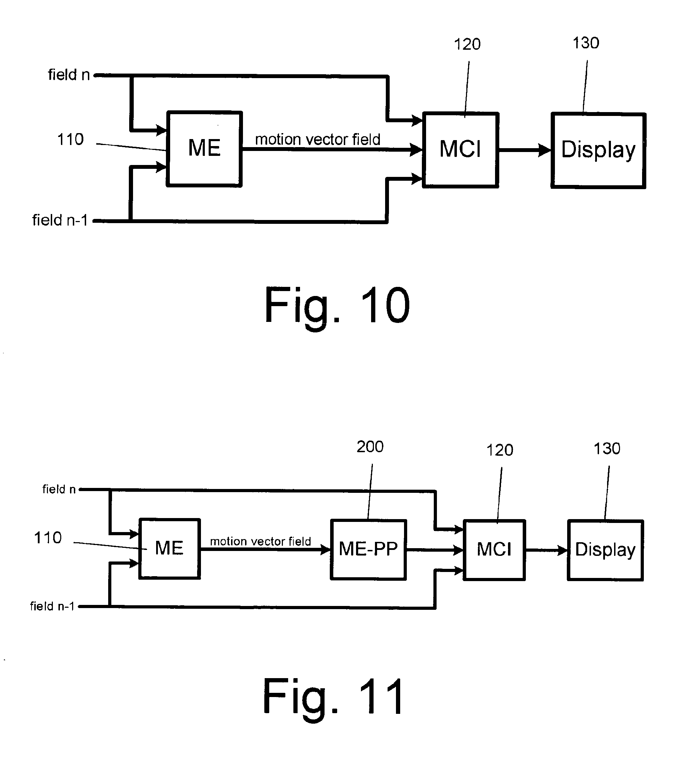

A configuration of a conventional field-rate converter is illustrated in Fig. 10. In order to perform a field-rate up-conversion of a video sequence from a predefined input frequency to a predefined output frequency, subsequent fields $n$ and $n-1$ are supplied to a motion compensated interpolation unit 120 for generating the up-converted video sequence for display on display device 130. The motion compensation operation of interpolation circuit 120 is based on a motion vector field provided from motion estimation unit 110. The motion vector field for the current field n is calculated based on the blocks of the current field n and of the previous field $n-1$. Motion estimation unit 110 calculates a motion vector for each of the blocks in an conventional manner as illustrated by way of example in Fig. 8.

According to the present invention, a motion estimation post-processing unit 200 is inserted into the supply path of the motion vector field to the motion compensated interpolation unit 120. The configuration of the field-rate converter modified in accordance with the present invention is illustrated in Fig. 11.

In accordance with the present invention, the conventionally calculated motion vector field provided by motion estimation unit 110 is subjected to post-processing in accordance with the present invention by a motion estimation post-processing unit 200. Those blocks which turn out to have in all probability a defective motion vector as illustrated, for instance, in Fig. 8, are identified. The motion vectors of these blocks are then overwritten by the respective line or column motion vector determined based on the previous field.

As it can be seen from Figures 8 and 9, all blocks falling into the range of defective motion vectors (cf. Fig. 8) are overwritten by the motion vector of the respective column (cf. Fig. 9). The respective corrected motion vector field is then supplied to the motion compensated interpolator 120 in order to perform the interpolation based on the corrected motion vector field.

The operation of the motion estimation post-processing unit 200 for correcting the received motion vector field is described next.

The motion estimation post- processing unit 200 receives a motion vector for each of the blocks of the current field $n$. The division of a field or frame into blocks B(x;y) is illustrated in Fig. 7. Each block has a width of X and a height of Y, preferably a uniform block size of $8 \times 8$ pixels is used. The skilled person is aware that any other block size may be used with the same effect. The number of blocks per line or column depends on the width X and height Y of each block and is calculated depending on the image size as follows:

$$x_{max} = \text{Pixels per line/X}$$

$$y_{max} = \text{Pixels per column/Y}$$

The motion vectors are calculated by the conventional motion estimator 110 preferably by evaluating a set of candidate vectors for the current motion vector. The candidate vectors are a predefined selection of motion vectors each of which providing another motion estimate for the current block. The best match motion vector from these candidate vectors is calculated based on an error function. For this purpose, preferably a Summed Absolute Difference (SAD) is calculated based on the current block $B(x;y)$ in the current field $n$ and a block in the previous field $n-1$ at a position defined by the inverse vector of the respective candidate vector.

The post-processing unit 200 receives the calculated motion vector field. A multiplexer is included in the post-processing unit 200 for selecting eiter the received input vector $v$ $[(x;y)n]$ or the corresponding column vector $v_{column}$ $[(x;0)n-1]$ to generate a respective output vector $v_{pp}$ $[(x;y)n]$ for each block. The multiplexer switches between the input vector and the column vector in accordance with a switching signal $ivpl$. The operation of the multiplexer is expressed by the following equation (9):

$$\vec{v}_{pp}\left[(x,y),n\right] = \begin{array}{l} \vec{v}_{column}\left[(x,0),n-1\right], if\,(ivpl=1) \\ \vec{v}\left[(x;y),n\right], else \end{array} \qquad (9)$$

The switching operation, i.e. the status of the switching signal $ivpl$, is mainly based on the following two criteria, namely (a) the size of the motion vector of the column in vertical direction and (b) whether or not the current block falls into a range for which no accurate motion vector can be calculated in conventional manner.

Referring to the first criterion, the signal $v\_motion$ indicates whether or not the vertical component of the column vector exceeds a predefined threshold $THR_{vy}$. This threshold is preferably equal to the vertical size Y of the blocks B(x;y). The calculation of the signal $v\_motion$ is expressed by the following equation (10):

$$v\_motion = \begin{array}{l} 1, if\left(vy\left[(x,0),n-1\right] > THR_{vy}\right) \\ 0, else \end{array} \qquad (10)$$

wherein

$$THR_{vy} = Y$$

The term $vy[(x, 0),n-1]$ of equation (10) represents the vertical component of the respective column vector (11):

$$\vec{v}_{column}[(x,0), n-1] = (vx[(x,0), n-1]; vy[(x,0), n-1]) \qquad (11)$$

Referring to the range calculation, i.e. those blocks for which a reliable motion vector estimation is not possible based on conventional algorithms, the outer border line of blocks is determined as a first and last active block line *FABL, LABL (FABL=* first active block line, *LABL =* last active block line):

$$FABL = \frac{FAL}{Y}$$

$$LABL = \frac{LAL}{Y}$$

wherein *FAL* and *LAL* represent the first and last active pixel line within each image as illustrated in Fig. 1.

While the first and last block index *FABL* and *LABL* represent the outer borders of the range of blocks for which the motion vector is to be replaced, the calculation of the inner border will be described next. The inner border of the range is indicated by the block line *VBBL.* In order to determine how many blocks starting from the outer border are to be taken into account for replacing the conventionally calculated motion vector, the column vector direction is first determined.

The signal *v_down* indicates whether the vertical component of the column vector of the previous image relating to the current block is pointing upwards or downwards. According to the present example, the binary signal *v_down* takes the value of 1 for motion vectors being directed downwards and 0 for motion vectors being directed upwards. A skilled person is aware that any other values may be used for this purpose. The calculation of the binary value *v_down* is expressed by the following equation (12):

$$v\_down = \begin{array}{l} 1, if\ \big(vy\ \big[(x,0),\ n-1\big] > 0\,\big) \\ 0\,, else \end{array} \qquad (12)$$

If the motion vector direction is downwards, i.e. the vertical column vector component *vy [(x, 0)n-1]* is positive, the vector length has to be added to the first active line index *FAL.* In contrast, if the motion vector direction is upwards, i.e. the vertical column vector component *vy [(x, 0)n-1]* is negative, the amount of the motion vector length has to be subtracted from the last active line index *LAL.* The subtraction of the vector length corresponds to adding the vector if it is negative.

In order to identify the block line *VBBL,* the respective line has to be divided by the block height Y. The calculation of the block line index *VBBL* is expressed by the following equation (13):

$$VBBL = \begin{array}{l} \dfrac{FAL + vy[(x,0), n-1]}{Y}, if\big(v\_down = 1\big) \\[2mm] \dfrac{LAL + vy[(x,0), n-1]}{Y}, else \end{array} \qquad (13)$$

Whether or not a current block is located within the area extending from the respective outer image border FABL, LABL to the inner border VBBL, is indicated by the binary signal *v_invalid.* The calculation of the *v_invalid* signal is expressed by the equation (14):

$$v\_invalid = \begin{array}{l} 1, if \left( \begin{array}{l} \big((v\_down = 1\big) \wedge \big(y >= FABL\big) \wedge \big(y <= VBBL\big)\big) \\ \vee \big((v\_down = 0\big) \wedge \big(y >= VBBL\big) \wedge \big(y <= LABL\big)\big) \end{array} \right) \\ 0, else \end{array} \qquad (14)$$

Accordingly, there are two options to set signals *v_invalid* to overwrite the conventionally calculated motion vector by the respective column vector. First, the column motion vector is directed downwards and the current block line y falls into the determined range $FABL \leq y \leq VBBL.$ Second, the column motion vector is directed upwards and the block line index y is within the range $VBBL \leq y \leq LABL.$ In all other cases, the current block does not fall into the range of incorrect motion vectors and the value of 0 is assigned to signal *v_invalid.*

All blocks for which the signal *v_invalid* is set to 1, the corresponding column vector is assigned to this block, but only if the column vector motion is in a vertical direction. This is controlled by the above-mentioned switching signal *ivpl.* The calculation of switching signal *ivpl* can be expressed by the following equation (15):

$$ivpl = v\_invalid \wedge v\_motion \qquad (15)$$

The present invention is not limited to the above described detailed embodiment of improved motion vector calculation for blocks located at the borders of the active image.

Summarising, the present invention relates to an improved estimation of motion vectors, especially for use in motion compensated interpolation for rate up-converters. As conventional motion estimation algorithms fail to provide accurate estimations for those blocks positioned at the borders of the active image, the present invention determines those blocks which may suffer from defected motion vectors and replaces these vectors by a column or a line motion vector determined based on the previous image. In this manner, a reliable motion estimation is enabled for all blocks of an image, and a degradation of interpolation algorithms at the borders of the active image can efficiently be prevented.

**Claims**

1. A method for determining a motion vector for a block of a current image in a sequence of video images, each video image being divided into a plurality of blocks
**characterized by** the steps of
determining a motion vector ($v_{line}$, $v_{column}$) for all blocks of a line or column of blocks in a previous image of said sequence of video images, said line or column of blocks includes a block located at a position corresponding to the position of the current block in the current image, and
assigning said determined line or column motion vector ($v_{line}$, $v_{column}$) to said current block if a position of the current block estimated on the basis of the determined line or column motion vector ($v_{line}$, $v_{column}$) is outside of the image area of the previous image.

2. A method according to claim 1, wherein said image area only comprising the active image area.

3. A method according to claim 2, wherein said active image area being framed by at least a couple of black bars positioned at opposite sides of the active image area.

4. A method according to claim 3, wherein said black bars frame said active image area at the top and bottom side.

5. A method according to claim 4, wherein said determining step only determines a column motion vector ($v_{column}$).

6. A method according to claim 2, wherein said black bars frame said active image area at the left and right side.

7. A method according to claim 6, wherein said determining step only determines a line motion vector ($v_{line}$).

8. A method according to any of claims 1 to 3, wherein said determining step determines a line motion vector ($v_{line}$) and a column motion vector ($v_{column}$).

9. A method according to any of claims 1 to 8, wherein said determining step further comprising the steps of:

   comparing said determined line or column motion vector ($v_{line}$, $v_{column}$) to a predefined threshold ($THR_{vy}$), and

   providing said determined line or column motion vector ($v_{line}$, $v_{column}$) to said assigning step only if said determined motion vector ($v_{line}$, $v_{column}$) exceeds said predefined threshold ($THR_{vy}$).

10. A method according to claim 9, wherein said threshold ($THR_{vy}$) having a value essentially corresponding to the block size.

11. A method according to claim 9 or 10, wherein said comparing step compares a vertical or horizontal component ($v_x$, $v_y$) of said determined motion vector ($v_{line}$, $v_{column}$) to said threshold ($THR_{vy}$).

12. A method according to claim 11, wherein said comparing step compares a vertical component ($v_y$) of said determined column motion vector ($v_{column}$) to said threshold ($THR_{vy}$).

13. A method according to claim 11, wherein said comparing step compares a horizontal component ($v_x$) of said determined line motion vector ($v_{line}$) to said threshold ($THR_{vy}$).

14. A method according to any of claims 1 to 13, wherein said assigning step comprises the step of determining a range of blocks for a line or column of the current image for which said determined motion vector ($v_{line}$, $v_{column}$) is to be assigned to said current block.

15. A method according to claim 14, wherein said step of determining a range of blocks comprises the steps of:

   identifying an outer border (FABL, LABL) of said range, and

   identifying an inner border (VBBL) of said range.

16. A method according to claim 15, wherein said outer border (FABL) being the a block of the border of the active image area.

17. A method according to claim 16, wherein said outer border (FABL) being selected from the outer borders of the active image area in accordance with the type and direction of said determined motion vector ($v_{line}$, $v_{column}$).

18. A method according to any of claims 1 to 17, wherein said line or column motion vector ($v_{line}$, $v_{column}$) being calculated based on at least two adjacent lines or columns of the previous image.

19. A method for encoding a sequence of video images including motion compensation employing a motion estimation method in accordance with any of claims 1 to 18.

20. A method for interpolating a sequence of video images including motion compensation employing a motion estimation method in accordance with any of claims 1 to 18.

21. A motion estimator for determining a motion vector for a block of a current image in a sequence of video images, each video image being divided into a plurality of blocks
   **characterized by**
   a calculation unit for determining a motion vector ($v_{line}$, $v_{column}$) for all blocks of a line or column of blocks in a previous image of said sequence of video images, said line or column of blocks includes a block located at a position corresponding to the position of the current block in the current image,
   a position estimator for estimating a position of the current block in the previous image based on the determined line or column motion vector ($v_{line}$, $v_{column}$),
   a comparator for determining whether or not said estimated position being outside of the image area of said previous image, and
   an enable unit for assigning said determined line or column motion vector ($v_{line}$, $v_{column}$) to said current block if the position of the current block estimated on the basis of the determined line or column motion vector ($v_{line}$, $v_{column}$) is outside of the image area of the previous image.

22. A motion estimator according to claim 21, wherein said image area only comprising the active image area.

23. A motion estimator according to claim 22, wherein said active image area being framed by at least a couple of black bars positioned at opposite sides of the active image area.

24. A motion estimator according to claim 23, wherein said black bars frame said active image area at the top and bottom side.

25. A motion estimator according to claim 24, wherein said calculation unit only determining a column motion vector ($v_{column}$).

**26.** A motion estimator according to claim 22, wherein said black bars frame said active image area at the left and right side.

**27.** A motion estimator according to claim 26, wherein said calculation unit only determining a line motion vector ($v_{line}$).

**28.** A motion estimator according to any of claims 21 to 23, wherein said calculation unit determining a line motion vector ($v_{line}$) and a column motion vector ($v_{column}$).

**29.** A motion estimator according to any of claims 21 to 28, wherein said calculation unit further comprising a comparator for comparing said determined line or column motion vector ($v_{line}$, $v_{column}$) to a predefined threshold ($THR_{vy}$), and wherein said enable unit only assigning said determined motion vector ($v_{line}$, $v_{column}$) to said current block if said determined motion vector ($v_{line}$, $v_{column}$) exceeds said predefined threshold ($THR_{vy}$).

**30.** A motion estimator according to claim 29, wherein said threshold ($THR_{vy}$) having a value essentially corresponding to the block size.

**31.** A motion estimator according to claim 29 or 30, wherein said comparator comparing a vertical or horizontal component (vx, vy) of said determined motion vector ($v_{line}$, $v_{column}$) to said threshold ($THR_{vy}$).

**32.** A motion estimator according to claim 31, wherein said comparator comparing a vertical component (vy) of said determined column motion vector ($v_{column}$) to said threshold ($THR_{vy}$).

**33.** A motion estimator according to claim 31, wherein said comparator comparing a horizontal component (vx) of said determined line motion vector ($v_{line}$) to said threshold ($THR_{vy}$).

**34.** A motion estimator according to any of claims 21 to 33, wherein said enable unit further comprising a range calculator for determining a range of blocks for a line or column of the current image for which said determined motion vector ($v_{line}$, $v_{column}$) is to be assigned to said current block.

**35.** A motion estimator according to claim 34, wherein said range calculator identifying an outer border (FABL, LABL) and inner border (VBBL) of the range within the image.

**36.** A motion estimator according to claim 35, wherein said outer border (FABL) being a block of the border of the active image area.

**37.** A motion estimator according to claim 36, wherein said outer border (FABL) being selected from the outer borders of the active image area in accordance with the type and direction of said determined motion vector ($v_{line}$, $v_{column}$).

**38.** A motion estimator according to any of claims 21 to 37, wherein said line or column motion vector ($v_{line}$, $v_{column}$) being calculated based on at least two adjacent lines or columns of the previous image.

**39.** An encoder for encoding a sequence of video images including motion compensation comprising a motion estimator in accordance with any of claims 21 to 38.

**40.** An interpolator for interpolating a sequence of video images including motion compensation comprising a motion estimator in accordance with any of claims 21 to 38.

**Amended claims in accordance with Rule 86(2) EPC.**

**1.** A method for determining a motion vector for a block of a current image in a sequence of video images, each video image being divided into a plurality of blocks
**characterized by** the steps of

determining a line or column motion vector ($v_{line}$, $v_{column}$) representing a common motion vector for a plurality of individual motion vectors of a line or column of blocks in a previous image of said sequence of video images, said line or column of blocks includes a block located at a position corresponding to the position of the current block in the current image, and

assigning said determined line or column motion vector ($v_{line}$, $v_{column}$) to said current block if a position of the current block estimated on the basis of the determined line or column motion vector ($v_{line}$, $v_{column}$) is outside of the image area of the previous image.

**21.** A motion estimator for determining a motion vector for a block of a current image in a sequence of video images, each video image being divided into a plurality of blocks
**characterized by**

a calculation unit for determining a line or column motion vector ($v_{line}$, $v_{column}$) representing a common motion vector for a plurality of individual motion vectors of a line or column of blocks in a previous image of said sequence of video images, said line or column of blocks includes a block located at a position corresponding to the position of the current block in the current image,

a position estimator for estimating a position of the current block in the previous image based on the determined line or column motion vector ($v_{line}$, $V_{column}$),

a comparator for determining whether or not said estimated position being outside of the image area of said previous image, and

an enable unit for assigning said determined line or column motion vector ($v_{line}$, $v_{column}$) to said current block if the position of the current block estimated on the basis of the determined line or column motion vector ($v_{line}$, $v_{column}$) is outside of the image area of the previous image.

# Fig. 1

# Fig. 2

# Fig. 3

The End

Starring:
vertical vector
moving credits
no global motion
motion estimation
motion compensation
framerate conversion

# Fig. 4

# Fig. 5

# Fig. 6

Fig. 7

Fig. 8

Fig. 9

Fig. 10

Fig. 11

**European Patent Office**

## EUROPEAN SEARCH REPORT

Application Number

EP 04 00 7698

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 897 247 A (PHILIPS PATENTVERWALTUNG ; KONINKL PHILIPS ELECTRONICS NV (NL)) 17 February 1999 (1999-02-17) * abstract * * paragraphs [0001], [0002], [0004], [0011] - [0014], [0018], [0025] * * figure 6 * | 1-40 | H04N7/00 H04N7/01 H04N7/26 |
| A | YEN-KUANG CHEN ET AL: "Frame-rate up-conversion using transmitted true motion vectors" PROCEEDINGS OF THE SECOND WORKSHOP ON MULTIMEDIA SIGNAL PROCESSING, REDONDO BEACH, CA, USA , IEEE, 7 December 1998 (1998-12-07), - 9 December 1998 (1998-12-09) pages 622-627, XP010318331 ISBN: 0-7803-4919-9 Section MOTION COMPENSATED INTERPOLATION | 1-40 | |
| D,A | HAAN DE G ET AL: "AN EFFICIENT TRUE-MOTION ESTIMATOR USING CANDIDATE VECTORS FROM A PARAMETRIC MOTION MODEL" IEEE TRANSACTIONS ON CIRCUITS AND SYSTEMS FOR VIDEO TECHNOLOGY, IEEE INC. NEW YORK, US, vol. 8, no. 1, 1 February 1998 (1998-02-01), pages 85-91, XP000737028 ISSN: 1051-8215 * the whole document * | 1,21 | TECHNICAL FIELDS SEARCHED (Int.Cl.7) H04N |

The present search report has been drawn up for all claims

| Place of search | Date of completion of the search | Examiner |
|---|---|---|
| Berlin | 26 October 2004 | Sampels, M |

EPO FORM 1503 03.82 (P04C01)

**ANNEX TO THE EUROPEAN SEARCH REPORT
ON EUROPEAN PATENT APPLICATION NO.**                    EP 04 00 7698

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2004

| Patent document cited in search report | Publication date | Patent family member(s) | Publication date |
|---|---|---|---|
| EP 0897247 A | 17-02-1999 | DE 19745029 A1 <br> EP 0897247 A2 <br> JP 11122621 A <br> US 6160917 A | 18-02-1999 <br> 17-02-1999 <br> 30-04-1999 <br> 12-12-2000 |

EPO FORM P0459

For more details about this annex : see Official Journal of the European Patent Office, No. 12/82